# EUROPEAN PATENT APPLICATION

(11) **EP 1 705 595 A2**
(43) Date of publication of application: **27.09.2006**
(21) Application number: 06006035.7
(22) Date of filing: 23.03.2006
(51) Int. Cl.: G06F 21/00

(54) **The authentication system and the authentication method which use a portable communication terminal**

(30) Priority: 25.03.2005 JP 2005088870
(71) Applicant: NEC Corporation, Minato-ku Tokyo (JP)
(72) Inventor: Komatsu, Kenichi, Tokyo (JP)
(74) Representative: Glawe, Delfs, Moll

(57) **Abstract**

Disclosed is an authentication method used in the system including a communication network, a mobile communication terminal (MT) and an authentication sub-system. When the subsystem receives an authentication request, it generates a first password information and converts the first password information to a first password motion picture signal. The first password motion picture signal changes its uniform color of a frame according to the first password information. The first password motion picture signal is transmitted to the MT. The MT receives the first password motion picture signal and transmits a second password motion picture signal to the subsystem. The subsystem performs inversion of the received second password motion picture signal to the second password information, and compares this second password information with the first password information. One of the first and second password motion picture signals is transmitted as a light signal.

## Description

### BACKGROUND OF THE INVENTION

### FIELD OF THE INVENTION

This invention relates to the authentication technology which enables prevention of spoofing, and particulary to the authentication technology which uses a portable communication terminal.

### DESCRIPTION OF THE RELATED ART

The password input for person identification is conventionally performed by a keypad input and communication with an external authentication apparatus. Recently, the technology which uses the radio device is proposed. As the radio device, proposed is an RFID (Radio Frequency Identification), IrDA, Bluetooth, and so on. However, the password input technology by these devices needs the addition of these new radio devices.

In addition, the password input technology using a still picture sensor is also known. In this technology, an image sensor, such as a camera, captures signs and characters, such as a bar code and a two-dimensional bar code, as a still picture signal. And the input device has read the password in the captured still picture by using pattern recognition technology. However, this technology needs a precise focal adjustment mechanism, in order to adjust the focus of an image sensor.

Moreover, in order to detect a sign and/or a character from the still picture, a terminal needs the advanced operation function for realizing a pattern recognition function. The terminal equipped with such a function is expensive in general.

Moreover, ID information input device using such an imaging sensor also has the following problem. A sign/characters, such as a bar code, are eternal information. Therefore, if a bar code etc. is copied unjustly, this technology is obliged to judge an illegal copy possessor to be the right person.

JP-A-2004-280518 discloses the authentication technology using the color picture selected by a user in order to identify himself or herself. The technology of the reference compares the inputted uniform color still picture with a color still picture registered corresponding to the user. However, this technology cannot but judge "others who possesses this copied color picture" to be the right person, when this color picture is unjustly copied.

### SUMMARY OF THE INVENTION

A first exemplary feature of this invention provides the system which does not need a precise focus adjustment mechanism and prevents spoofing by the copy, theft, etc. of password information.

According to first exemplary aspect of the invention, there is provided an authentication method used in the system including a communication network, a mobile communication terminal and an authentication sub-system. When the authentication subsystem receives an authentication request, it generates a first password information. The authentication subsystem converts the first password information to a first password motion picture signal. The first password motion picture signal changes its uniform color of a frame according to the first password information. This first password motion picture signal is transmitted to a portable communication terminal.
The portable communication terminal receives the first password motion picture signal, and transmits a second password motion pictute signal to the authentication subsystem. The authentication subsystem performs inversion of the received second password motion picture signal to the second password information, and compares this second password information with the first password information. One of the first and second password motion picture signal is transmitted as a light signal.

In the first exemplary aspect of the invention, the password information inputted or outputted to the authentication subsystem (including an authentication apparatus and an authentication server) is a video signal of which color changes a frame-by-frame or unit frames-by-unit frames. Therefore, the precise focas adjustment mechanism is unnecessary. This is because each of the password motion picture signals has the same color and the same intensity within at least one frame. A portable communication terminal in recent years has many things equipped with the TV phone (television-phone) function.Since this TV phone function is equipped with TV camera as a picture input unit, and the display as a light emitting unit, this aspect does not need new radio devices, such as RFID.

Moreover, by use of this TV phone function, an authentication server updates password information frequently and this aspect can distribute the updated password information to a user's portable communication terminal. That is, the aspect easily realizes an One-Time password and can prevent spoofing by the copy/theft of password information.

Other features and aspects will become clear from the description of the preferred embodiments.

### BRIEF DESCRIPTION OF THE DRAWINGS

In the accompanying drawings:
FIG.1 shows a block diagram of the first embodiment of the invention;
FIG. 2 shows the transmitting example of the password motion picture signal;
FIG. 3 shows an example of the intebsity value of each color of a color picture;
FIG. 4 shows an example of correspondence of a time combination of colors and data value;
FIG. 5 is a block diagram showing the example of composition of the authentication server 102 of FIG. 1;
FIG. 6 is a block diagram showing the example of composition of the authentication apparatus 105 of Fig. 1;
FIG. 7 is a block diagram showing the example of composition of the portable phone terminal 105 of FIG. 1;
FIG. 8 shows a flow chart for explaining operations of the embodiment 1 of the invention;
FIG. 9 shows a flow chart for explaining operations of the embodiment 2 of the invention;
FIG. 10 is a block diagram showing the embodiment 3 of the invention;
FIG. 11 shows a flow chart for explaining operation of the embodiment 3;
FIG. 12 is a block diagram showing the embodiment 4 of the invention;
FIG. 13 is a block diagram showing the details of FIG. 12.;
FIG. 14 is a flow chart for explaining operation of the embodiment 4.;
FIG. 15 shows the example of ID information database;
   and
FIG. 16 shows the example of a telephone number database.

### DETAILED DESCRIPTION OF THE PREFERRED EMBODIMENTS

With reference to an accompanying drawing, the preferred embodiments of this invention are explained hereafter.

### EMBODIMENT 1

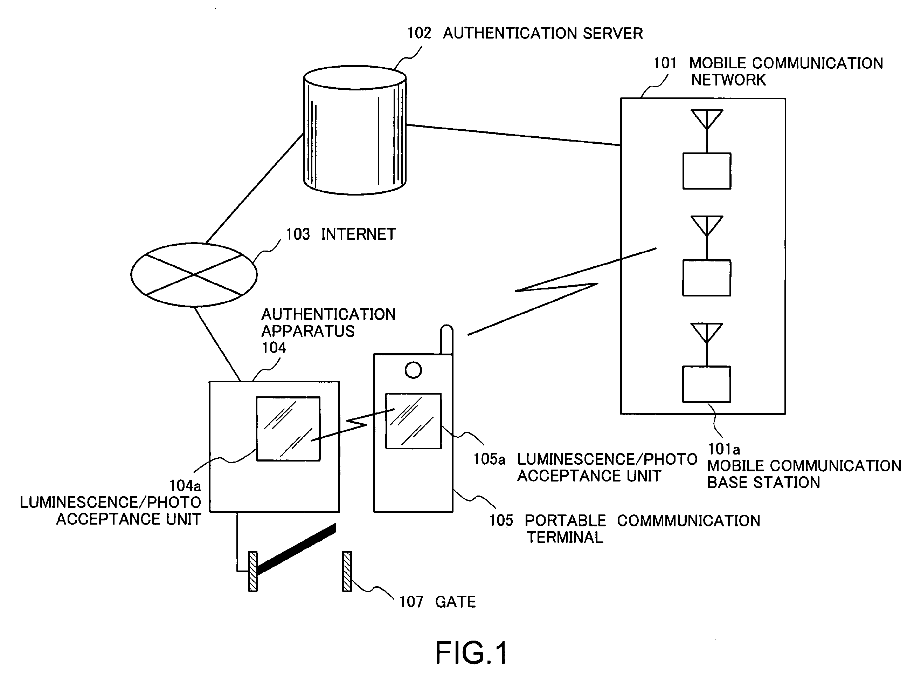

FIG. 1 is a block diagram showing the embodiment 1 of the of the invention. Fig. 1 shows the example which uses this invention for an entrance gate management system.

As shown in FIG. 1, this system includes a mobile communications network 101, the authentication server 102, the Internet 103, authentication apparatus 104, the portable communication terminals 105 (let a "portable phone terminal" be an example ,below), and a gate 107.

Moreover, the mobile communications network 101 can accommodate two or more mobile communications base stations 101a.
The mobile communications network 101 can communicate with the portable phone terminal 105.
The authentication server 102 is connectable to the authentication apparatus via the Internet 103. In addition, the authentication apparatus may be connected with the authentication server via intranet.

The portable phone terminal 105 is connectable to the authentication server 102 through the mobile communications network 101.

The authentication apparatus 104 is equipped with luminescence / photo acceptance element 104a. The portable phone terminal 105 is equipped with luminescence / photo acceptance unit 105a.
In addition, luminescence / photo acceptance unit 104a of authentication apparatus is used in the embodiment 1fas a photo acceptance element, and luminescence / photo acceptance unit 105a of a portable phone terminal is used as a light emitting unit.

When the authentication server receives the authentication request from authentication apparatus through the Internet, it generates unique password information. Next, the authentication server 102 generates a password motion picture signal based on this password information. The authentication server encodes this password motion picture signal (for example, based on an MPEG system), and transmits the encoded password motion picture signal to the portable phone terminal through the mobile communications network 101. This transmission is performed by TV phone connection. Moreover, the authentication server also transmits password information to authentication apparatus 104 through the Internet 103.

The authentication server 102 can change password information for every access to the same portable phone terminal. Namely, the authentication server generates different password information to the same user for every authentication request from authentication apparatus etc.

The portable phone terminal 105 has a unique telephone number, and has photo acceptance element, such as a camera, and the light emitting unit represented by a liquid crystal / LED / organic electroluminescence as luminescence / a photo acceptance unit 105a.
The portable phone terminal 105 transmits the password motion picture signal received from the authentication server 102 to authentication apparatus 104 in visible light. At this time, the portable phone terminal 105 transmits the password motion picture signal of visible light using the luminescence function of luminescence / photo acceptance unit 105a.

The authentication apparatus 104 receives the password motion picture signal of visible light using the reception function of luminescence / photo acceptance unit 104a. The authentication apparatus inverts the password motion picture signal received from the portable phone terminal to password information.

This embodiment includes two following modifications. One is a case where the authentication apparatus performs compares the password information from the authentication server and that from the portable phone terminal (to be called "modification 1" hereinafter). The second is the case where the authentication apparatus asks the authentication server to perform the comparison processing (to be called "modification 2" hereinafter).

If the authentication apparatus performs the comparison processing (modification 1), the authentication apparatus 104 compares the password information from the authentication server with the password information from the portable phone terminal. In this modification, the authentication server is configured to send the generated password information to the authentication apparatus.

If the authentication performs the comparison processing (modification 2), the authentication server does not need to transmit the generated password information to the authentication apparatus. In this case, the authentication apparatus 104 transmits the password information received from the portable phone terminal to the authentication server 102 and it asks the server to perform the comparison processing. The authentication server returns a comparison result to authentication apparatus. At the time of this request, authentication apparatus may transmit the password motion picture signal itself which is received from the portable phone terminal to the authentication server.

In any of these two modifications, when the comparison result shows "coincidence", the authentication apparatus opens a gate 107.

In this embodiment, the portable phone terminal owner transmits the password motion picture signal received from the authentication server to the authentication apparatus as a visible light signal.
Reception and transmission of this password motion picture signal can be performed by using TV telephone function with which the portable phone terminal is equipped. Therefore, in this embodiment, the portable phone terminal (generally, "portable terminal fitted with a TV telephone function") does not necessitate a new radio device etc for authentication. Further, since a color and the intensity are substantially the same within at least one frame, as for a password motion picture signal, the authentication apparatus does not need the function to perform a precise focus adjustment mechanism, pattern recognition processor, etc., as mentioned later. Moreover, since the authentication server can generate and distribute different password information by time to the same portable phone terminal owner, this embodiment can prevent spoofing by the copy/theft of password information.

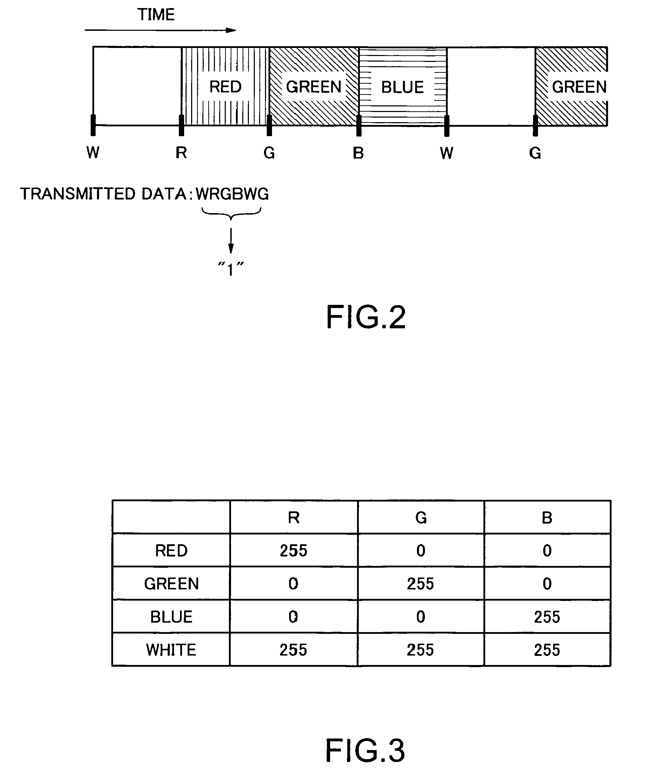

Before explaining the details of the embodiment of FIG. 1, an example of the password motion picture signal used in this invention is now explained with reference to FIGs. 2, 3 and 4.

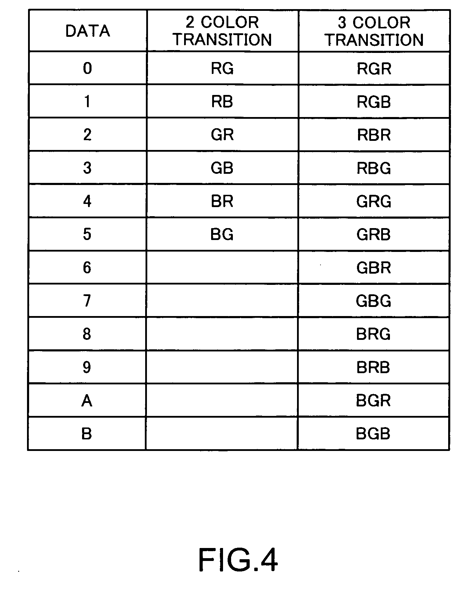

FIG. 2 shows the transmitting example of the password motion picture in this invention, FIG. 3 shows the example of the intensity value of each color of a color picture, and FIG. 4 shows the example of correspondence of a time combination of colors and the data value of a password information.

As shown in FIG. 2, password motion picture signal changes color at a predetermined interval. Within each frame of the password motion picture signal its color and intensity value are almost constant.In FIG. 2, colors are three colors of red (R), green (G), and blue (B), and each intensity value is either one of a lower limit (0) or upper limit (255) as shown in FIG. 3.

The frame or frames in which the example of FIG. 2 contains white (W) shows the boundary of each digit of the numerical value which corresponds to a password information. A change order of the colors between "white (W) " and following "W" shows the numerical value of each digit of the password information.

FIG. 4 shows the example of correspondence of a change order of this color, and a numerical value. FIG. 4 shows that six kinds of numerical values can be expressed, when the number of change of colors between white information and the next white information is set as "2". FIG. 4 also shows that 12 kinds of numerical values can be expressed, when the number of color changes is set as "3".

It is shown that the example of FIG. 2 transmits the color chande of the 3 times change as one digit of password information while using "W (R=255, G= 255, B= 255)" as a boundary of each digit.
The order in FIG. 2, "R, G, and B" shows that "1" is transmitted as a single digit of the numerical value of password information. In the above, the example of 1 expression of the password information in the password motion picture signal was explained. However, it is obvious that other permutation of colors as well as this example may be used.

The reception side of this password motion picture signal can restore the password information easily by carrying out RGB separation of the received password motion picture signal and comparing the separated trichromatic signals with a fixed threshold value (for example, 128) . Therefore, this embodiment does not need to be equipped with an expensive function such as a pattern recognition function.

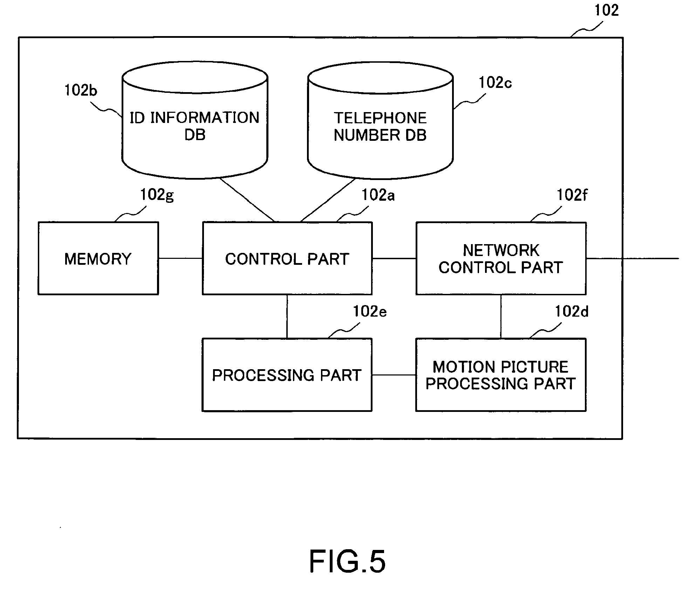

Next, the composition of the authentication server 102, authentication apparatus 104, and the portable phone terminal 105 of FIG. 1 will now be explained with reference to FIGs. 5-7.

FIG. 5 is a block diagram which the composition of the authentication server 102 of FIG. 1.

AS shown in FIG. 5, the authentication server 102 consists of the control part 102a, the ID information database (ID information DB) 102b, the telephone number database 102c, a motion picture processing part 102d and processing part 102e, a network control part 102f and memory 102g.

The ID information database 102b stores ID information which is a number for specifying the individual who obtained permission beforehand. In the example of entrance management of FIG. 1, an introduction permission number, an employee number, etc. can be used as this "number for specifying an individual."
Moreover, the ID information database may also register the identification number of authentication apparatus etc.,.
It should be noted that these ID information is different from the password information which the authentication server generates.

The telephone number database 102c is made to correspond with ID information in ID information database, and stores the telephone number of the individual's portable phone terminal.

The control part 102a performs control of each functional parts and the databases 102b and 102c.

When the control part receives a authentication request from the authentication apparatus via the network control part, it directs the processing part 102e to generate password information.
Moreover, based on ID information added to this authentication request, the control part 102a searches the telephone number database 102c, and supplies the telephone number corresponding to this ID information to the network control part 102f.

In the case of the the modification 1 mentioned above, i.e., where the authentication apparatus performs the comparison processing, the control part 102a transmits the password information to the authentication apparatus 4 via the network control part 102f and the Internet 103.

In the case of the modification 2 mentioned above, i.e., where the authentication server performs the comparison processing, the control part 102a compares the password information which the processing part generated with the password information transmitted from authentication apparatus, and answers a comparison result to authentication apparatus.

The processing part 102e builds in a random number generator etc. As above-mentioned, in response to the direction from the control part 102a, the processing part 102e generates password information and supplies the generated password information to the control part 102a. The control part stores this password information in memory 102g.

The motion picture processing part 102d is used when making connection of a portable phone terminal with a TV phone. The motion picture processing part 102d converts the password information generated by the processing part to a password motion picture signal. MPEG coding, for example, is carried out and this password motion picture signal is transmitted to a network control part.

The network control part 102f set up TV telephone line between the telephone number supplied from the control part 102a and the authentication server and transmits the coded password motion picture signal from the motion picture processing part102d.

Moreover, in the above-mentioned modification 1, the network control part transmits the password information from the control part 102 to the authentication apparatus via the Internet 103.

Moreover, in the above-mentioned modification 2, the network control part receives the authentication request (the password motion picture signal from a portable phone terminal is included) from, the authentication apparatus 104 and transfers the request to the control part 102a.

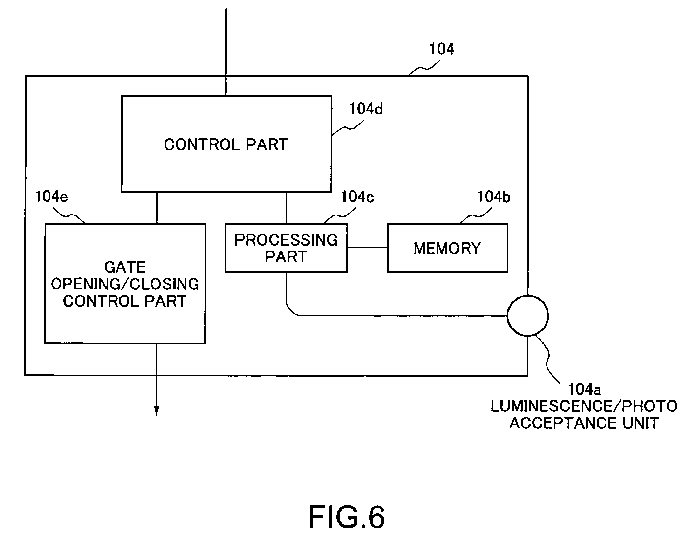

Next, explained is the composition of the authentication apparatus 104 of FIG. 1 with reference to FIG. 6.

As shown in FIG. 6, the authentication apparatus 104 consists of luminescence/photo acceptance element 104a, a memory 104 b, a processing part 104c, a control part 104d, and a gate opening/closing control part 104e.

When the control part receives an ID information from the magnetic card reader etc. (not shown), it transmits a password issue request with the ID information to the authentication server 102.Here, a user may use the keypad on authentication apparatus and may input ID information, for example, an employee number etc.

The luminescence/photo acceptance element 104a receives the optical password motion picture signal from a portable phone terminal, and reproduces an electorical password motion picture signal, and transmits it to the processing part 104c. In this embodiment, a TV camera, an O/E (optical-electrical) converter, etc. may be used as the luminescence/a photo acceptance element 104a.

The processing part 104c inverts the password motion picture signal into a password information, and transmits it to the control part 104d.

Operation of the control part 104d in the modification 1 is slightly different from that in the modification 2.

In the case of the modification 1, i.e., whera the authentication apparatus performs the comparison processing, the control part 104d compares the password information, which is received from the authentication server 102 and is stored in the memory 104b, with the password information, which is supplied from the processing part 104c. When the comparison result shows "coincidence", the control part 104d instructs the gate opening/closing control part 104to open the gate 107.

In the case of the modification 2, i.e., where the authentication server performs the comparison processing, the control part 104d sends, to the authentication server, a comparison request along with the password information received from the processing part 104c. If the reply form from the authentication server shows authentication success", the control part 104d instructs the gate opening/closing control part 104to open the gate 107.

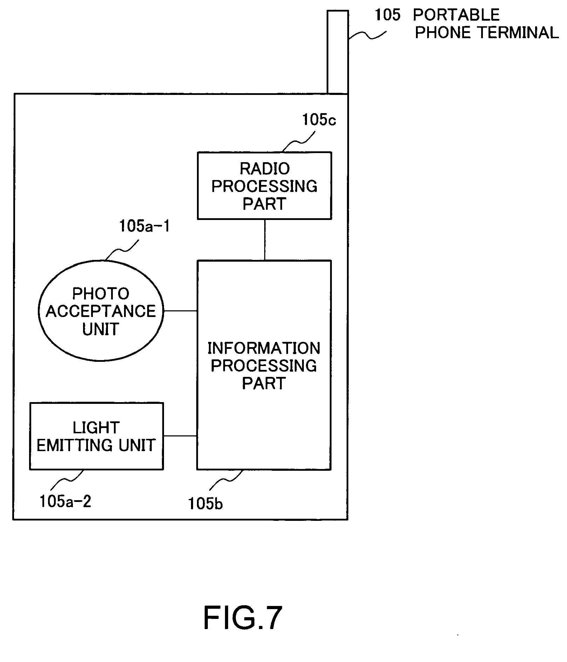

Next, explained is configuration of the portable phone terminal with reference to FIG. 7.

As shown in FIG. 7, the portable phone terminal 105 contains a photo acceptance unit 105a-1, a light emitting unit 105a-2 (such as TV camera), the information processing part 105b, and the radio processing part 105c. Here, the photo acceptance unit 105a-2 is not used in the the operation 1 but is used in the the modification 2.

The radio processing part 105c receives the encoded password motion picture signal from an authentication server, and transmits it to the information processing part 105b. The information processing part 105b decodes the encoded password motion picture signal and reproduces a password picture signal. The reproduced password picture is supplied to light emitting unit 105a-1. The light emitting unit outputs the reproduced password picture signal as a light signal.

The composition of the embodiment 1 was described above. Since the mobile communications network and the mobile communication base station of FIG. 1 are known well for a person skilled in the art and they are not directly related to this invention, the detailed explanation is omitted.

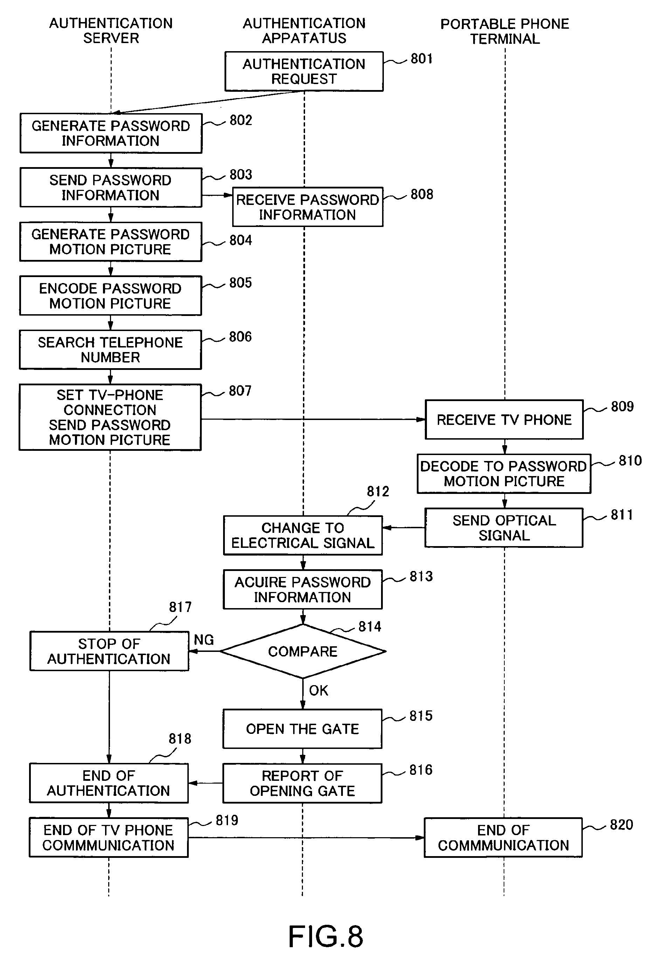

Next, with reference to FIG. 8, explained are operations of each part of FIG. 1 and cooperation of the each part.

FIG. 8 is a flow chart corresponding to the modification 1 of the embodiment 1.

In FIG. 8, a user inputs a numbers, such as his/her employee number, as information for specifying the user first. The user may input the information for specifying this individual with the magnetic card ("ID information ", as mentioned above).

At Step 801, the authentication apparatus transmits the authentication request including this ID information to the authentication server. At step 802, the authentication server generates a password information in response to this authentication request. At step 803, the authentication server transmits this password information to the authentication apparatus. The authentication apparatus receives and stores this password information in the memory 104b.

Next, at step 804, the authentication server converts the password information to a password motion picture signal as shown in FIG. 2, for example. And the authentication server encodes this password motion picture signal (for example, MPEG coding) at step 805. At step 806, the authentication server searches the telephone number of the portable phone terminal corresponding to ID information received from the authentication apparatus from the telephone number database 102C of FIG. 5.

And, at step 807, the authentication server and sets a TV telephone line to the portable phone terminal with this telephone number.
The authentication server sends the encoded password motion picture signal to he portable phone terminal using the TV telephone function.

Next, at step 809, the portable phone terminal receives TV telephone signal and obtains the encoded password motion picture signal. At Step 810, the portable phone terminal decodes the encoded password motion picture signal and reproduces the password motion picture signal. And. At step 811, the portable phone terminal supplies the reproduced password motion picture signal to the light emitting unit 105a-1 (FIG. 7). At Step 811, the light emitting unit 105a-1 changes the reproduced password motion picture signal into a light signal.

At Step 812, the authentication apparatus changes the received light signal into an electric signal of the password motion picture signal. At Step 813, the authentication apparatus acquires password information from this password motion picture signal. At Step 814, the authentication apparatus compares the password information from the authentication server with the password information from the portable phone terminal. If this comparison result is "non-coincidence (NG)", the authentication apparatus notify "stop of authentication" to the authentication server. If this notice is received at Step 817, the authentication server ends the authentication processing at Step 818 and terminates TV telephone communication with a portable phone terminal at Step 819.

If the comparison result in Step 814 shows "coincidence", the authentication apparatus, at Step 815, makes the gate opening/closing control part 104e (FIG. 6) open the gate 107. Then, authentication apparatus reports an authentication success to the authentication server. When the authentication server receives the report, it performs the Steps 818 and 819, and terminates the TV telephone communication with the portable phone terminal.

### EMBODIMENT 2

In the embodiment 1, the password motion picture signal generated by the authentication server 102 is sent to the portable phone terminal via TV telephone line.

In the embodument 2 described below below, the password motion picture signal generated by the authentication server 102 is sent to the portable phone terminal 105 via the authentication apparatus 104.

The portable phone terminal sends the password motion picture signal received from authentication apparatus to the authentication server. In this embodiment 2, the photo acceptance element 105a-1 of the portable phone terminal, which is not used in the embodiment 1, is used. Further, the embodiment 2 uses the luminescence function of the light reception/emitting element 104-a (inside of authentication apparatus).

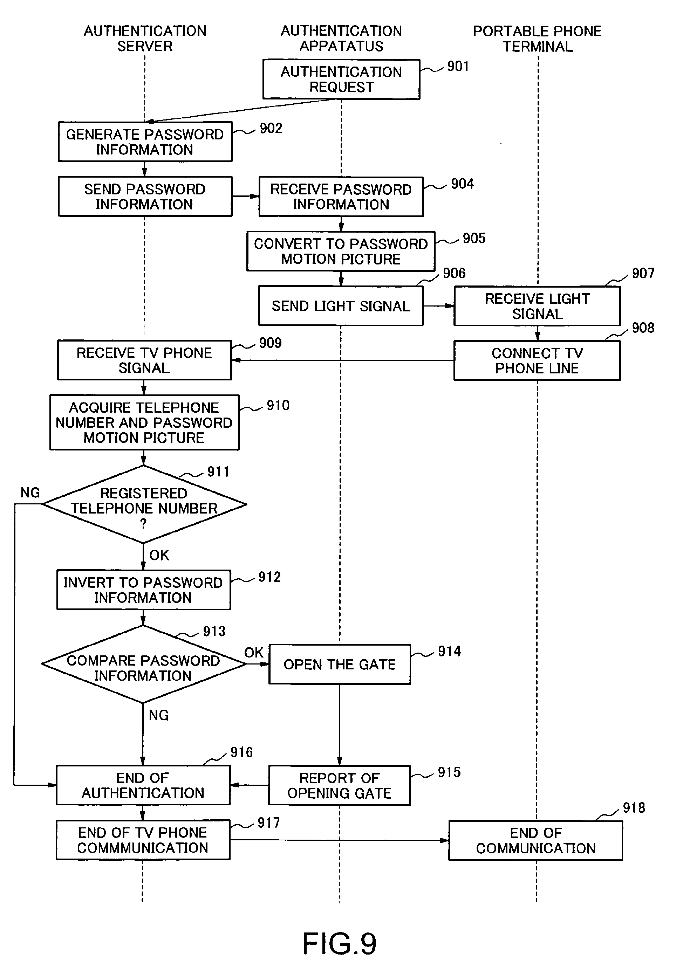

FIG. 9 is a flow chart for explaining operation of theembodiment 2.

In FIG. 9, if the authentication apparatus receives ID information input by a magnetic card etc., it sends an authentication request including this ID information to the authentication server at Step 901.

At Step 902, the authentication server generates password information according to this authentication request.
And, at Step 903, the authentication server transmits this password information to the authentication apparatus. The authentication apparatus saves this password information inside temporarily.

At Step 904, the authentication apparatus receives this password information. And the, processing part 104c of authentication apparatus converts this password information into password motion picture signal (Step 905). At Step 906, luminescence / photo acceptance unit 104a transmits this password motion picture signal to the portable phone terminal as a light signal.

At Step 907, the portable phone terminal receives this light signal. And, at Step 908, the portable phone terminal sets the TV telephone line to the authentication server, and transmits this password motion picture signal (or encoded password motion picture signal) to the authentication server.

At Step 909, the authentication server receives TV telephone from the portable phone terminal and receives the password motion picture signal. And, at Step 910, the authentication server acquires the telephone number of a portable phone terminal from a receiving TV telephone signal.

Next, at Step 911, the authentication server searches the ID information database and the telephone number database of FIG. 5. And the authentication server judges whether the telephone number of the portable phone terminal which sent this TV telephone signal is registered.
When this judgment result is "O.K.", the processing of the authentication server proceeds to Step 912. When this judgment result is "NG", the processing of the authentication server proceeds to Step 916.

At Step 912, the authentication server inverts the received password motion picture signal to password information. And, at Step 913, the authentication server compares the password information from the portable phone terminal with the password information generated at Step 902. When this comparison result shows "coincidence", the authentication server notifies "authentication success" to the authentication apparatus. When this comparison result shows "non-coincidence", the processing of the authentication server proceeds to Step 916.

At Step 916, the authentication server ends authentication processing. Then, the authentication server, at Step 917, terminates the TV telephone communication with the portable phone terminal. In response, the portable phone terminal also ends this TV telephone communication at Step 918.

The authentication apparatus at Step 914, receives the notice of an authentication success , it will open the gate 107 of FIG. 1 at Step 915. Then, the authentication apparatus transmits the signal which shows "GATE OPEN" to the authentication server. If this signal is received at Step 916, the authentication server performs the Steps 916 and 917.

### EMBODIMENT 3

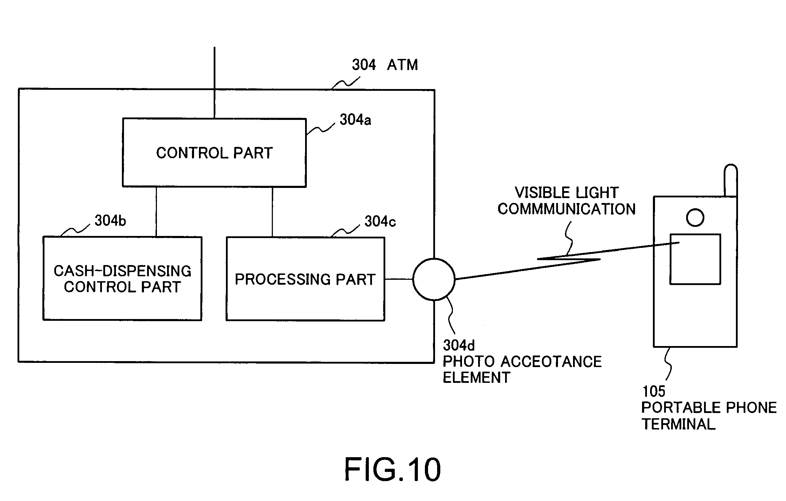

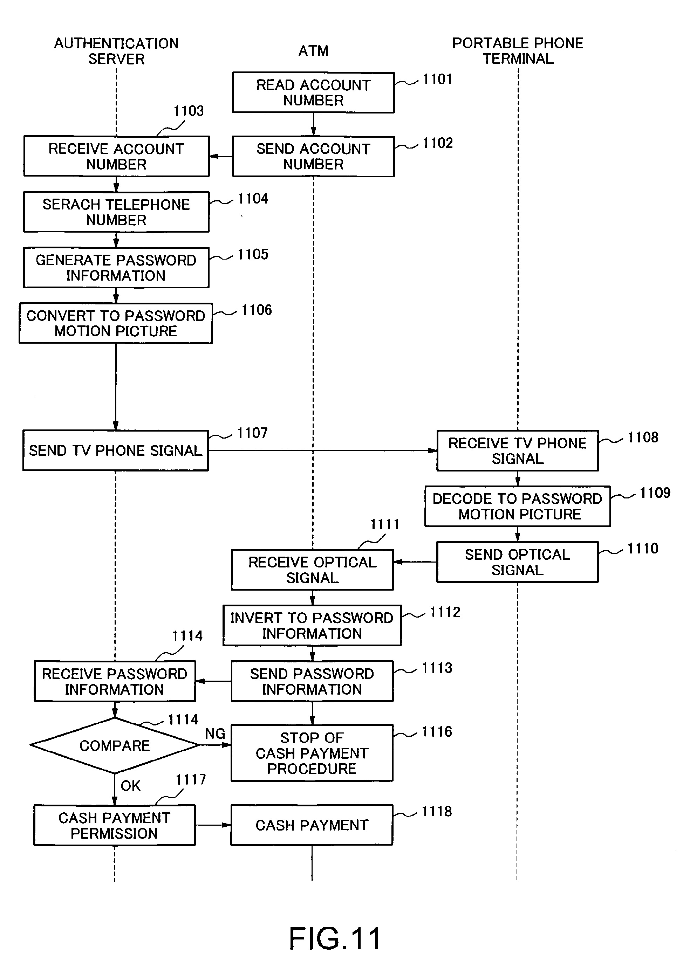

Next, with reference to FIGs. 10 and 11, the embodiment 3 of the invention is explained.

This embodiment is an example in which the invention is appled to the Automated Teller Machine (ATM) system.
In this embodiment, the authentication apparatus 104 of FIG. 1 is transposed to ATM 304 of FIG. 10.

FIG. 11 is a flow chart for explaining operation of the whole system which used this ATM.

Fundamentally, the internal composition of ATM is the same as that of the authentication apparatus of FIG. 6, as shown in FIG. 10.
The ATM machine 304 of FIG. 10 consists of a control part 304a, a cash-dispensing control part 304b, a processing part 304c and a photo acceptance element 304d.

Next, also with reference to FIG. 11, operation of this embodiment is explained.

If a user inserts an ATM card in ATM 304, ATM304 reads an account number in this ATM card at Step 1101. Next, the ATM transmits this account number to the authentication server 102 at Step 1102.
In this case, ATM's own identification number may be attached to this account number.

At Step 1103, the authentication server 102 receives an account number. At Step 1104, the authentication server 102 acquires the telephone number corresponding to this account number from the ID information database 102b and the telephone number database 102c of FIG. 5. Thereby, the authentication server obtains the telephone number of the portable phone terminal which the owner of the account number owns. Next, an authentication server, at Step 1105, generates password information. the generation method of password information is already described. This password information is saved in the the authentication server temporarily with the identification number of ATM which is received along with the account number.

Next, at Step 1106, the authentication server converts this password information into a password motion picture signal, and encodes this password motion picture signal.
The authentication server sends, at Step 1107, a TV telephone signal to the portable phone terminal which has the telephone number acquired at Step 1104 and transmits the encoded password motion picture signal.

At Step 1108, the portable phone terminal receives the TV phone signal from an authentication server, and acquires the encoded password motion picture signal. At Step 1109, the portable phone terminal decodes the encoded password motion picture signal and acquires a password motion picture signal. Then, this password motion picture signal is emitted as a light signal from light emitting unit 105a-1 of FIG. 7 at Step 1110.

At Step 1111, the ATM 304 receives the optical signal emitted from the portable phone terminal 105 and acquires a password motion picture signal (an electric signal). At Step 1112, the ATM inverses this password motion picture signal to password information, which is sent to the authentication server along with the identification number of ATM itself at Step 1113.

Next, at Step 1114, the authentication server receives the password information from ATM. And the authentication server, at Step 1115, compares the password information received from ATM with the password information generated at Step 1105.

If the comparison result is "non-coincidence", the authentication server sends to the ATM a message which shows "authentication unsuccess". The ATM stops cash payment procedure, if this message is received (Step 1116).

If the comparison result is "coincidence", the authentication server, at Step 1117, sends the message which shows "cash payment processing permission" to the authentication apparatus (namely, ATM).
Then, the cash payment control part 304b performs the cash payment procedure at Step 1118, when this message is received.

In this way, this embodiment manages personal information by a telephone number and is exchanging password information through a TV phone signal. Therefore, this embodiment can confirms that the right person is present in front of the ATM by the communication between the authentication server and the portable phone terminal owned by the right person. Further, the authentication server can change this password information for every dealings. Therefore, even if the third person acquires the password motion picture signal by tapping of an ATM circuit or TV telephone etc., this third person cannot obtain cash unjustly.

Moreover, the ATM cash dispenser 304 identifies only time change of the color information emitted from the display of the portable phone terminal. Therefore, ATM does not necessitate expensive finctions in order to acquire password information from the password motion picture signal. The ATM should just be equipped with the easy addition mechanism containing a photo-diode and color filters in order to extract password information.

In this embodiment, the portable phone terminal supplies the optical password motion picture signal to ATM. This embodiment may be modified as follows. In this modification, the ATM supplies the optical password motion picture signal to the portable phone terminal, and the portable phone terminal supplies an electric password motion picture signal to the authentication server through TV telephone line.

Since the details of this modification are the same as that of the modification 2 of the embodiment a, detailed explanation is omitted.

### EMBODIMENT 4

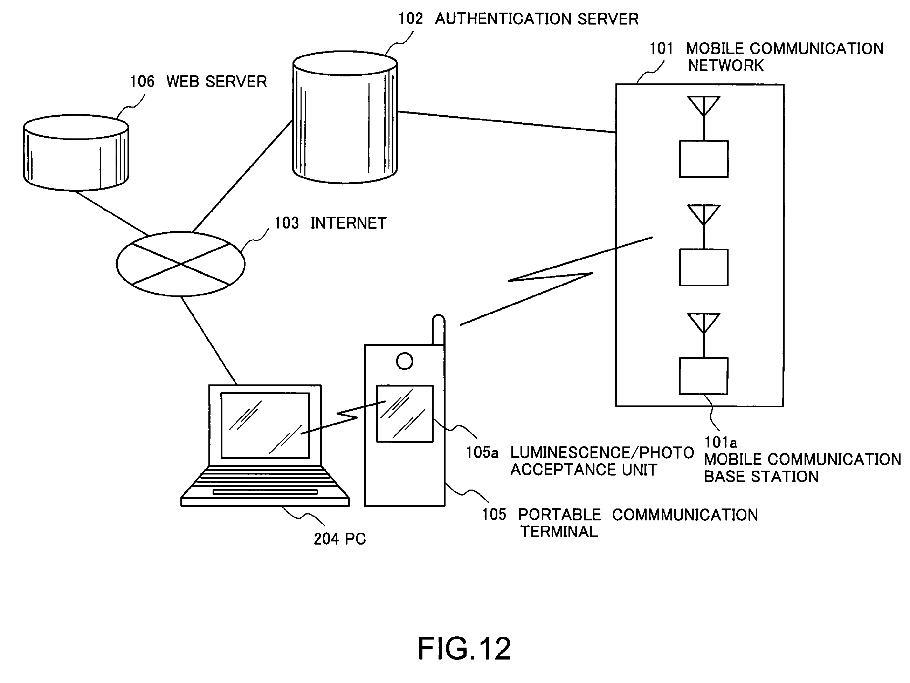

Next, with reference to FIGS 12-16, the embodiment 4 of this invention is explained.
The embodiment 5 shown in FIG. 12 is an example in which the invention is applied to the access authentication system to the Web server.

In FIG. 12, Web server 106 receives the password information transmitted from the authentication server 102, and it converts this password information into a password motion picture signal.
On the entrance picture of the website, the password motion picture signal is superimposed. That is, the password motion picture signal is displayed on a part of the entrance picture of this site that the personal computer 204 accesses. On the display 204a of the personal computer (PC) 204 of FIG. 12, this situation is shown.

The photo acceptance element of the portable phone terminal 105 receives the password motion picture signal. The portable phone terminal 105 transmits the received password motion picture signal to the authentication server 102 as a TV phone signal through a mobile communications network.

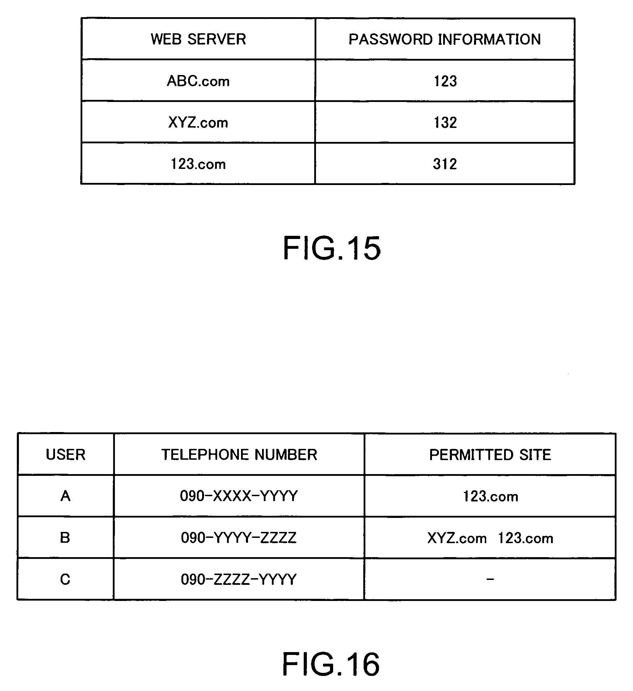

The authentication server 102 generates the password information, if the authentication request from a Web server 106 is received. The authentication server transmits this password information to a Web server. The password information is stored in ID information database (104b of FIG. 5) with ID information on the Web server which isuues the authentication request (authentication request side ID), as shown in FIG. 15.

The authentication server receives the TV phone signal from the portable phone terminal and obtains a password motion picture signal and a telephone number of the portable phone terminal.

The authentication server reproduces password information from the password motion picture signal received from the portable phone terminal. And the authentication server judges whether the portable phone terminal possessor is permitted entrance to the website with reference to ID information database and a telephone number database based on the password information and telephone number which are obtained from the portable phone terminal.

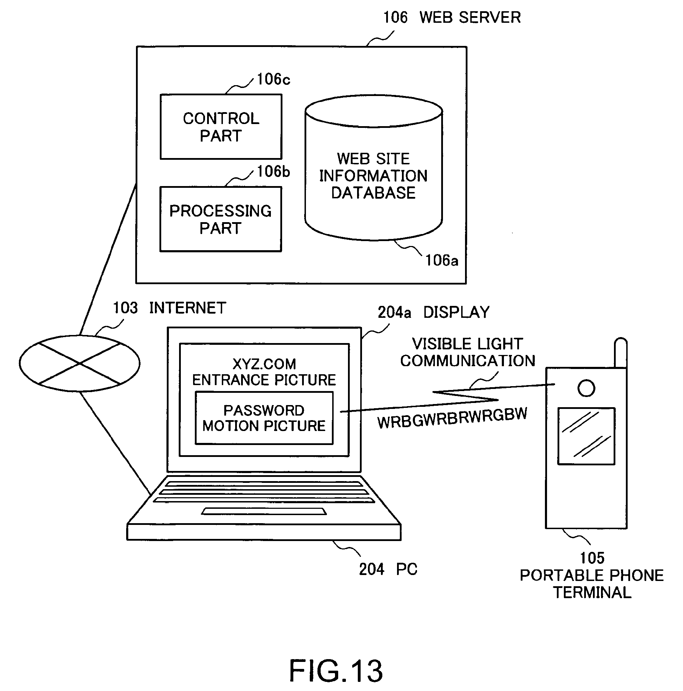

FIG. 13 shows the details of Web server 106 and PC 204 of FIG. 12.

As shown in FIG. 13, the Web server 106 is equipped with a website information database 106a, a processing part 106b and the control part 106c. The website information database 106a holds the contents of the site. About these functions, it will become clear from the following description.

The processing part 106b converts the password information transmitted from the authentication server 102 to the password motion picture signal. The processing part 106b superimpose this password motion picture signal to an entrance picture of the site.

The WEB server is connectable with PC 204 through the Internet 103; and a user accesses Web server 106 from the PC.

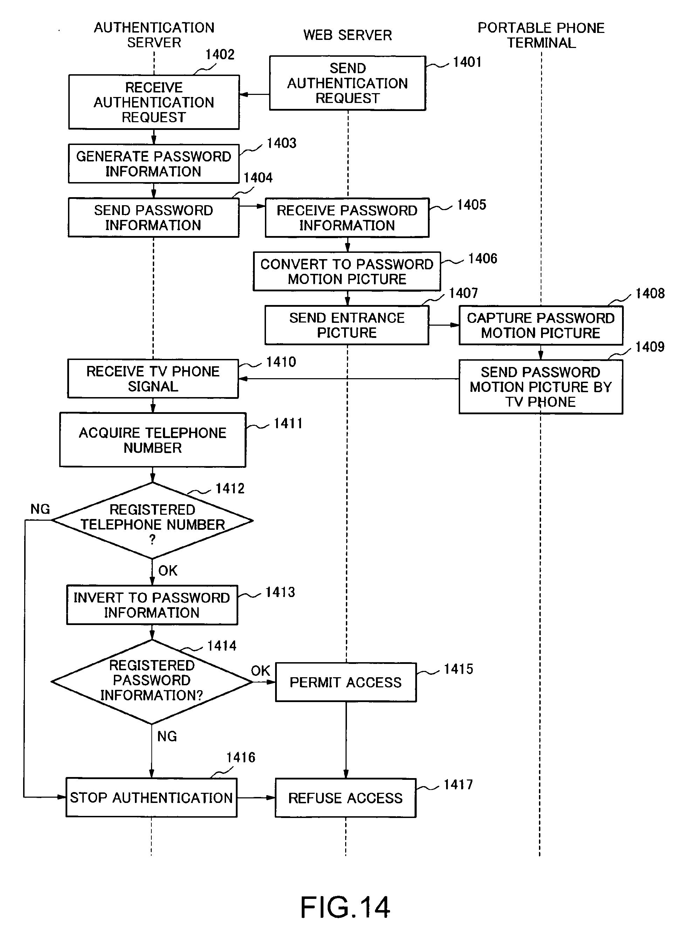

Next, with reference also to FIG. 14, operation of this embodiment is explained.

It is assumed, in FIG. 12, that the user, who wants to access the site of XYZ.com, accesses the Web server having XYZ.com site information, or contents.

Then, at Step 1401 of FIG. 14, the control part 106c of the Web server sends an authentication request to the authentication server. This authentication request contains ID information on this website (XYZ. com), a user's ID number, etc.

At Step 1402, the authentication server receives the authentication request. At Step 1403, the authentication server generates the password information on the Web server (XYZ. com site). And the authentication server stores the group of ID information on a website, and password information in ID information database, as shown in FIG. 15. At Step 1404, the authentication server transmits the generated password information to the Web server 106 through the Internet 103.

At Step 1405, the Web server receives the password information. And the Web server, at Step 1406, converts the password information to a password motion picture signal. The password motion picture signal is superimposed on the entranse picture, which ias transmitted to PC 204 at Step 1407. This picture is displayed on the display of PC 204

The user captures the password motion picture signal with TV camera of the portable phone terminal (Step 1408). The portable phone terminal, at Step 1409, sends a TV tephone signal to the authentication server, and sends the captured password motion picture signal.
The telephone number of this portable phone terminal is also sent to the authentication server.

At Step 1410, the authentication server 102 receives the TV telephone signal. At Step 1411, the authentication server obtains the password motion picture signal and the telephone number of the portable phone terminal.

Next, the authentication server confirms whether the received telephone number is registered in the telephone number database at Step 1412. The telephone number database of the embodiment has a table of a user's portable phone terminal telephone number and the site where access is permitted as shown in FIG. 16.

When the result of this check shows that the access to the site is not allowed for the user of this portable phone terminal, the processing of the authentication server proceeds to Step 1416. When the result of this check shows that the access to the site is allowed for the user of the portable phone terminal, the processing of the authentication server proceeds to Step 1413.

At Step 1413, the authentication server invert the received password motion picture signal from the terminal to password information.

Next, the authentication server, at Step 1414, compares the password information acquired from the portable phone terminal and password information generated at Step 1402. That is, the authentication server searches Web server ID into which this password information is registered. When this password information is registered, the authentication server sends the message which shows "authentication success" to the Web server. If this message is received, the Web server, at Step 1415, permits the access to the site by the user.

When the password information is not registered in the ID information database, the processing of the authentication server proceeds to Step 1416.

At Step 1416, the authentication server sends the message which shows "authentication failure" to the Web server. If this message is received, the Web server, at Step 1417, refuse the access to the site by the user.

In addition, also after the authentication success, the authentication server 102 may generate new password information and may send it to the Web server sonthat the above processing may be repeated. This modification strengthens the spoofing prevention capability. For example, let us consider the case where the user permitted access to the site leaves from the PC bringing the portable phone terminal and the PC is being connected to the WEB site. Even if the third person uses the PC under this situation, this third person cannot access that site. For example, please also consider the case where the third person receives and transmits a password motion picture signal to the authentication server with its own portable phone terminal. In this case, the authentication server can forbid access to the site by this third person by judgment at Step 1412.

### OTHER EMBODIMENTS

The embodiments mentioned above may also modified as follows. For example, in each embodiments mentioned above, the portable phone terminal may also have an input mechanism by which the terminal acquires biometrics information (such as, the face picture, finger print of the operator) and sends the acquired biometrics information to the authentication server. If the portable phone terminal is equipped with such an additional mechanism and the owner lose the portable phone terminal, this modification can prevent an unauthorized use.

Moreover, the embodiments mentioned explained above uses the portable phone terminal as an example. However, in this invention, it may replace the portable phone terminal with d the personal digital assistant which has a TV phone function. There is a portable personal computer as such a personal digital assistant or the like.

Moreover, in the embodiments mentioned above, the telephone number is used as ID information for specifying a portable phone terminal and an individual. an e-mail address can also be used as the information. In this case, between an authentication server and a personal digital assistant, a password motion picture signal is transmitted as a video file attached to E-mail.

While this invention has been described in connection with certain exemplary embodiments, it is to be understood that the subject matter encompassed by way of this invention is not be limited to those specific embodiments. On the contrary and it is intended for the subject matter of the invention to include all alternatives and modifications and equivalents as can be included with the sprit and scope of the following claims. Further, the inventor's intent is to retain all equivalents even if the claims are amended during prosecution.

## Claims

1. An authentication system including a mobile communications network, a portable communication terminal and an authentication subsystem,
said authentication subsystem comprising:
A password generator that generates a first password information when an authentication request is received, wherein said authentication request includes an ID information specifying an ouner of said portable communication terminal;
A data base that stores the telephone number of said portable communication terminal corresponding to said ID information;
A converter that converts said first password information to a password motion picture signal, said password motion picture signal is a signal which changes its color at a predetermined frame interval on the basis of said first password information;
a communication part that searches a telephone number of said portable communication terminal from said database on the basis of said ID information and transmits said first password motion picture signal to the portable communication and that receives a second password motion picture signal from said portable communication terminal;
an inverter that inverts said second password motion picture signal to a second password information; and
a password information comparison part that compares said first and second password information; and
said portable communication terminal including:
a motion picture signal transceiver that receives said first password motion picture signal and transmits said second password motion picture signal to said authentication subsystem:
wherein one of said first and second password motion picture signals is transmitted by an optical signal.

2. The system of claim 1, wherein
said authentication subsystem comprising an authentication apparatus and an authentication server connected to the authentication apparatus;
said authentication server including:
said password generator;
said converter which generates said first password motion picture signal;
said database;
an authentication server side radio communication unit which transmits said first password motion picture signal via said mobile communication network; and
a communication part which transmits said first password information to said authentication apparatus;
said motion picture signal transceiver of the said portable communication terminal receives said first password motion picture signal, changes the received first password motion picture signal to an optical signal and transmit the optical signal as said second password motion picture signal to said authentication apparatus;
said authentication apparatus including:
an authentication side receiver which receives said first password information from said authentication server;
an optical receiver which receives said second password motion picture signal of the optical signal and change it to said second password motion picture signal of an electrical signal;
said inverter; and
said password information comparison part.

3. The system of the claim 2, wherein
Said authentication apparatus is an introduction gate closing mechanism, an Automated Teller Machine (ATM), or a WEB server.

4. The system of claim 3, wherein said authentication server and said portable communication terminal are connected by the TV phone line connection.

5. The System of Claim 1, wherein
Said authentication subsystem comprising an authentication apparatus and an authentication servers connected to the authentication apparatus;
said authentication server including:
said password information generator;
said database;
an authentication server side transmitter which transmits said first password motion picture signal to said authentication apparatus;
an authentication server side receiver which receives said second password motion picture signal from said portable communication terminal;
said inverter; and
said password information comparison part;
said video signal transceiver of said portable communication terminal receives said first password motion picture signal to said second password motion picture signal and transmits it to said authentication server;
said authentication apparatus including:
an authentication apparatus side receiver which receives said first password information from said authentication server;
said converter;
a light emitting part which transmits this converter output to said portable communication terminal as said first password motion picture signal of said optical signal.

6. The system of claim 4, wherein
Said authentication apparatus is an introduction gate closing mechanism, Automated Teller Machine, or a WEB server.

7. The system of claim 6, wherein
said authentication server and said portable communication terminal are connected by TV phone line connection.

8. The authentication subsystem used in an authentication system including a mobile Communications Network, a portable communication terminal and the authentication subsystem, said authentication subsystem comprising:
a password generator that generates said first password information upon receiving an authentication request, said authentication request containing ID information which identifies the owner of said portable communication terminal;
a database that stores the ID information and a telephone number of said portable phone terminal;
a converter that converts said first password information to a first password motion picture signal which changes its color at a predetermined frame interval on the basis of said first password information;
a communication part that searches a telephone number of said portable communication terminal from said database on the basis of said ID information and transmits said first password motion picture signal to a portable communication terminal with the searched telephone number and that receives a second password motion picture signal from said portable communication terminal;
an inverter that inverts said second password motion picture signal to a second password information; and
a password information comparison part that comoares said first and second password information;
wherein one of said first and second password motion picture signals is transmitted as an optical signal.

9. The subsystem of the claim 8, wherein
said subsystem comprises an authentication apparatus and an authentication server connected to the authentication apparatus,
said authentication server including:
said password generator;
said converter which generates said first password motion picture signal;
said database;
an authentication server side radio communication unit which transmits said first password motion picture signal via said mobile communication network; and
a communication part which transmits said first password information to said authentication apparatus;
said authentication apparatus including:
an authentication side receiver which receives said first password information from said authentication server;
an optical receiver which receives said second password motion picture signal of the optical signal and change it to said second password motion picture signal of an electrical signal;
said inverter; and
said password information comparison part.

10. The subsystem of Claim 8, wherein
said subsystem comprises an authentication apparatus and an authentication server connected to the authentication apparatus,
said authentication server including:
said password information generator;
said database;
an authentication server side transmitter which transmits said first password motion picture signal to said authentication apparatus;
an authentication server side receiver which receives said second password motion picture signal from said portable communication terminal;
said inverter; and
said password information comparion part; and
said authentication apparatus including:
an authentication apparatus side receiver which receives said first password information from said authentication server;
said converter;
a light emitting part which transmits this converter output to said portable communication terminal as said first password motion picture signal of said optical signal.

11. An authentication method used in an uthentication System which includes a mobile Communications Network, a portable Communication Terminal and an authentication subsystem, comprising the steps of:
(A) said authentication subsystem, upon receiving an authentication request, generates a first password information, wherein said authentication request contains an ID information specifying the owner of said portable communication terminal;
(B) said authentication subsystem converts said first password information to a first password motion picture signal which changes its color at a predetermined interval on the basis of said first password information;
(C) said authentication subsystem searches the telephone number based on said ID information and transmits said first password motion picture signal to the portable communication terminal with the searched telephone number;
(D) said portable communication terminal receives said first password motion picture signal, transmit it , as said second password motion picture signal, to said authentication subsystem;
(E) said authentication subsystem inverts said received second password motion picture signal from said portable communication terminal to a second password information; and
(F) said authentication subsystem compares said iirst and second password information This second password information is compared with the password information;
wherein one of said first and second password motion picture signals is transmitted as a light signal.
